Europäisches Patentamt

European Patent Office

Office européen des brevets

(19)

(11) Numéro de publication: **0 279 999**
**B1**

(12) **FASCICULE DE BREVET EUROPEEN**

(45) Date de publication du fascicule du brevet:
**26.09.90**

(51) Int. Cl.⁵: **B62B 3/10**

(21) Numéro de dépôt: **87402982.0**

(22) Date de dépôt: **24.12.87**

(54) Support de caisse pour chariot de transport, et chariot equipe d'un tel support.

(30) Priorité: **04.02.87 FR 8701333**

(43) Date de publication de la demande:
**31.08.88 Bulletin 88/35**

(45) Mention de la délivrance du brevet:
**26.09.90 Bulletin 90/39**

(84) Etats contractants désignés:
**BE DE ES GB IT LU NL**

(56) Documents cités:
**DE-A- 3 319 722**
**FR-A- 2 210 546**

(73) Titulaire: **ATELIERS REUNIS CADDIE, 13, rue de la Mairie, F-67300 Schiltigheim(FR)**

(72) Inventeur: **Le Marchand, Alain, 13, rue des Primevères, F-67460 Souffelweyersheim(FR)**
Inventeur: **Gillot, Raymond, Résidence Mansart Avenue du Général de Gaulle, F-67800 Bischheim(FR)**

(74) Mandataire: **Tony-Durand, Serge, Cabinet Tony-Durand 77, rue Boissière, F-75116 Paris(FR)**

ACTORUM AG

# Description

La présente invention concerne les chariots de transport, notamment pour la clientèle des magasins de libre-service pour transporter les produits et marchandises choisis. Ces chariots sont constitués par une grande corbeille de transport située à une certaine hauteur par rapport à un socle inférieur sur lequel sont fixées les roulettes, et dont une poignée de manoeuvre peut être prévue à la partie supérieure de l'extrémité arrière de l'ensemble.

Dans le but de réduire l'encombrement de ces chariots lorsqu'ils sont en attente d'utilisation, ceux-ci sont en général conçus de façon à être emboîtables les uns dans les autres. A cet effet, la paroi verticale arrière de la corbeille de transport est constituée par un volet articulé à l'endroit de son bord supérieur de façon à pouvoir être soulevé pour permettre l'engagement de l'extrémité avant de la corbeille d'un autre chariot. Pour sa part, le socle inférieur de ces chariots présente une forme permettant l'emboîtement de plusieurs chariots les uns dans les autres par engagement de chacun d'eux dans l'extrémité arrière d'un autre chariot.

Pour le transport de certains objets encombrants, tels que des caisses d'emballage de bouteilles de boissons diverses, il a déjà été proposé d'ajouter, à l'arrière de la corbeille de transport, une plate-forme susceptible de servir de support à ces objets. Cependant la présence d'une telle plate-forme est une gêne pour la conduite du chariot par son utilisateur, car celle-ci fait saillie en arrière du brancard de manoeuvre. C'est la raison pour laquelle il a déja été envisagé de monter une telle plateforme de façon qu'elle puisse être escamotée sous la corbeille de transport, lorsqu'elle n'est pas utilisée. Mais il n'en reste pas moins que lors de son emploi, une telle plate-forme continue à constituer une gêne pour l'utilisateur du chariot.

Une autre solution encore, décrite dans DE 3 319 722, consiste à prévoir un support constitué par un volet basculant disposé à la partie supérieure de l'arrière de la corbeille de transport d'un chariot du type en cause. L'agencement ainsi prévu ne gêne pas l'emboîtement d'un autre chariot car le volet basculant est prévu au dessus de la zone d'emboîtement. Toutefois, cette position très élevée présente des inconvénients pour la stabilité du chariot si une charge lourde est placée sur le support prévu. Par ailleurs, la surface utile de ce support présente une importance réduite, de sorte qu'il ne peut recevoir que des objets de surface limitée. D'autre part, cette surface s'étend simplement à l'horizontale lorsque le support basculant est en position d'utilisation. Dans ces conditions, les objets placés sur ce support ne sont pas immobilisés en place, et ils peuvent glisser vers l'avant ou vers l'arrière si le chariot est placé sur un tapis roulant incliné.

C'est pourquoi la présente invention a pour but de réaliser un chariot du type rappelé précédemment dans lequel il est prévu un support particulier pour les objets encombrants, mais dont la conception est telle que la présence de ce support ne perturbe en rien les conditions normales d'utilisation de ce chariot et que les objets placés sur ce support s'y trouvent parfaitement immobilisés.

A cet effet, l'invention a pour objet un chariot de transport, notamment pour la clientèle des magasins à libre-service, du type comportant une grande corbeille de transport, située au-dessus d'un socle monté sur des roulettes, et qui comporte un support s'étendant dans le sens transversal pour pouvoir recevoir une caisse d'emballage ou similaire, caractérisé en ce que le support ainsi prévu affecte la forme d'un dièdre ouvert vers le haut apte à constituer un berceau de réception pour une caisse d'emballage ou similaire, ce support étant disposé à l'intérieur de la corbeille de transport du chariot correspondant, en avant de la partie de cette corbeille à l'intérieur de laquelle s'emboîte la partie avant de la corbeile similaire d'un autre chariot lors de la réunion de ceux-ci.

L'invention a aussi pour objet un accessoire pour un chariot e transport consistant en un support susceptible d'être fixé transversalement à l'intérieur de la corbeille comme précisé dans la revendication 7.

Dans une forme de réalisation particulière du support supplémentaire selon l'invention, celui-ci est constitué par une grille métallique coudée en V, dont les extrémités sont fixées sur la face interne des parois latérales de la corbeille de transport du chariot correspondant.

Dans une autre forme de réalisation du support en cause, celui-ci est matérialisé par deux éléments en V rapportés, en regard l'un de l'autre, sur la face interne des parois latérales de la corbeille de transport d'un chariot, chacun de sces éléments en V étant avantageusement constitué par un fil métallique plié dans cette forme.

Eventuellement le support en forme de dièdre prévu dans la partie avant de la corbeille de transport peut être associé à un volet mobile susceptible d'être disposé à l'horizontale au-dessus de ce support lorsque celui-ci n'est pas utilisé, afin de servir lui-même de support horizontal pour des objets divers, ce volet étant par ailleurs susceptible d'être escamoté verticalement contre la paroi avant de la corbeille de transport du chariot.

Cependant d'autres particularités et avantages du chariot de transport selon l'invention apparaitront au cours de la description suivante de quelques exemples de réalisation de celui-ci. Cette description est donnée en référence au dessin annexé à simple titre indicatif, et sur lequel :

La figure 1 est une vue en perspective d'une première forme de réalisation du chariot selon l'invention.

La figure 2 est une vue partielle en plan de dessus de la corbeille de transport de ce chariot.

La figure 3 est une vue partielle en coupe selon la ligne III-III de la figure 2, mais à échelle différente.

La figure 4 est une vue en perspective du support supplémentaire en forme dièdre prévu à l'intérieur de la corbeille de transport de ce chariot.

La figure 5 est une vue partielle en perspective de la corbeille d'un autre chariot à l'intérieur de laquelle est installé un support supplémentaire selon l'invention, celui-ci correspondant à une autre for- l'invention, celui-ci correspondant à une autre forme de réalisation.

La figure 6 est une vue similaire à la figure 1, mais qui représente une autre forme de réalisation encore dans laquelle le support supplémentaire en forme de dièdre est associé à un volet mobile pouvant servir de plateau horizontal de support.

La figure 7 est une vue partielle en perspective de la partie avant de la corbeille de ce chariot, le volet mobile étant représenté en position d'escamotage.

La figure 8 est une vue partielle en coupe selon les lignes VIII-VIII de la figure 7, mais dans laquelle le volet mobile est représenté dans sa position d'utilisation.

La figure 9 est une vue partielle en coupe selon la ligne IX-IX de la figure 8.

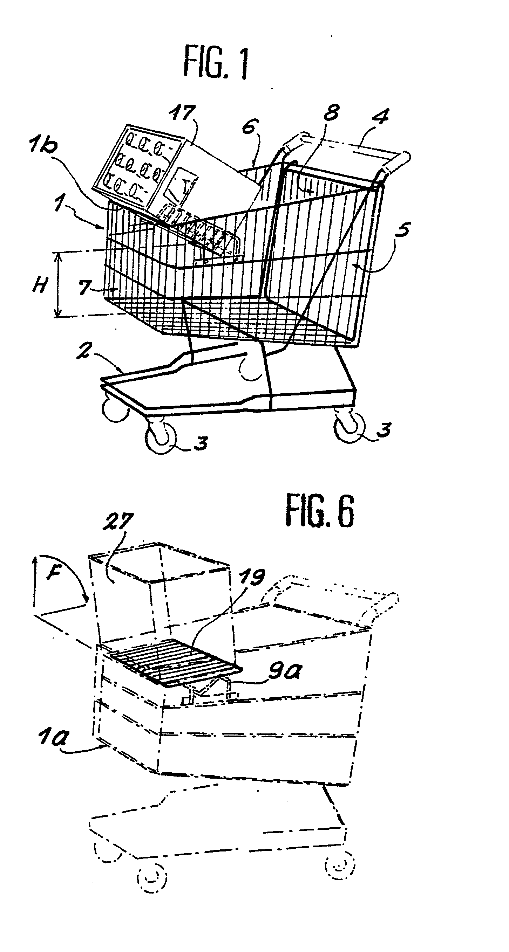

Le chariot représenté sur la figure 1 est constitué, de la façon habituelle, par une grande corbeille 1 de transport située au-dessus d'un socle inférieur 2 pourvu de roulettes 3, une poignée de manoeuvre 4 étant prévue à la partie supérieure de l'extrémité arrière de l'ensemble. Les parois latérales 5 et 6 de la corbeille de transport, ainsi que son fond et sa paroi avant 7, sont constitués par des grilles métalliques fixes. Par contre la paroi verticale arrière de cette corbeille est formée par un volet 8 articulé à l'endroit de son bord supérieur, de façon à pouvoir être soulevé lors de l'emboîtement de deux chariots l'un dans l'autre.

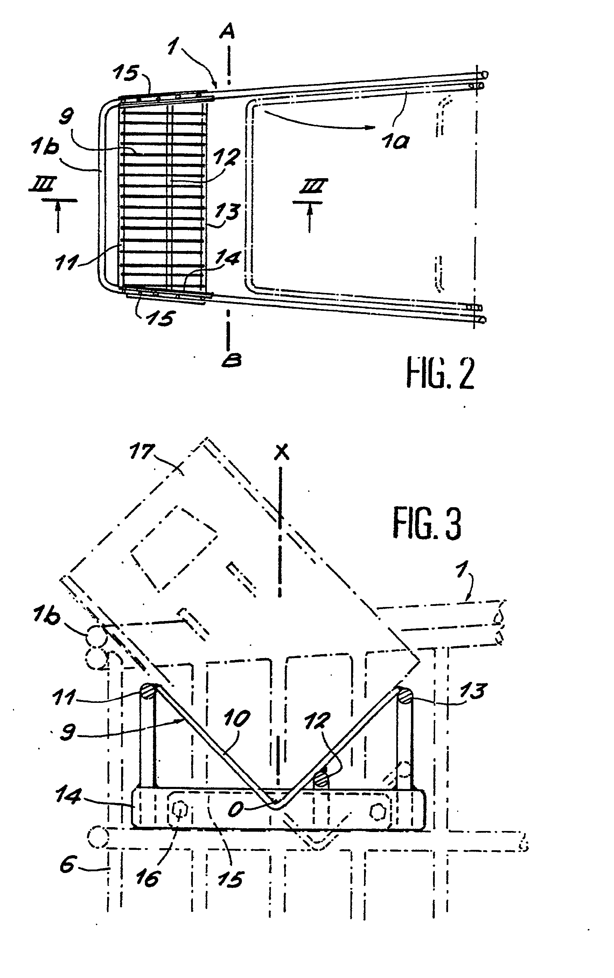

A l'intérieur de la partie avant de la corbeille 1, il est prévu un support transversal 9 en forme de dièdre ouvert vers le haut. Dans l'exemple représenté aux figures 2 et 3, ce support est constitué par une grille en fils métalliques qui est pliée en V. Cette grille comprend une série de fils 10, pliés en V, prenant appui sur trois fils horizontaux 11, 12 et 13 qui s'étendent transversalement à l'intérieur de la corbeille 1. Les extrémités de ces fils horizontaux sont coudées vers le bas et fixées sur des plaques 14 servant de supports à l'ensemble. Ces plaques sont fixées contre la face interne des parois latérales 5 et 6 de la corbeille 1 au moyen de contre-plaques 15, disposées du côté externe et réunies à ces plaques par des boulons 16 de serrage.

Il convient de noter que ce support 9 en forme de dièdre est disposé dans la partie avant de la corbeille 1, en avant d'une ligne transversale A-B qui correspond à la limite d'emboîtement de l'extrémité avant de la corbeille 1a d'un autre chariot à l'intérieur de celle du présent chariot (voir figure 2). Ainsi l'adjonction du support 9 en forme de dièdre ne gêne en aucune façon l'emboîtement des chariots selon l'invention les uns à l'intérieur des autres, de la même façon que les chariots habituels de supermarchés.

Il faut également noter que le support 9 en forme de dièdre est disposé à une certaine hauteur H par rapport au fond inférieur de la corbeille 1. Dans ces conditions il est possible à l'utilisateur de placer un certain nombre d'objets ou marchandises au-dessous de ce support. Ainsi l'adjonction de celui-ci à l'intérieur de la corbeille 1 ne réduit que de façon très limitée le volume possible de remplissage de cette corbeille.

L'angle formé par le dièdre constitué par la grille 9 est un angle droit. Dans ces conditions cette grille constitue en quelque sorte un berceau apte à recevoir une caisse 17 de section restangulaire, telle que les caisses servant d'emballages pour des bouteilles de boissons diverses, par exemple : vin, bière, eaux minérales, etc. Ainsi une telle caisse peut être placée sur le support 9 an emboîtant l'un de ses coins à l'intérieur du dièdre formé par ce support. Cette caisse est ainsi maintenue dans la position inclinée représentée à la figure 3, position dans laquelle elle fait partiellement saillie au-dessus des bords supérieurs de la corbeille 1. Or la disposition du support 9 est telle que la caisse 17, placée dans celui-ci, prend également appui sur le bord avant 1b de la ceinture supérieure de cette corbeille 1. Cette caisse peut alors être disposée soit dans le sens de la longueur, soit dans celui de la largeur.

Pour qu'une telle caisse puisse se maintenir ainsi de façon stable, il est nécessaire que la bissectrice O-X de l'angle du dièdre 9 soit disposée verticalement, ou à peu près verticalement, avec une possibilité de variation de 15° environ dans un sens ou dans l'autre. En effet il convient d'éviter qu'une caisse telle que la caisse 17, puisse glisser vers l'avant ou vers l'arrière et s'échapper ainsi de son support.

Lorsque le chariot équipé d'un tel support 9 est destiné à être éventuellement placé sur un tapis roulant incliné à 12°, ou sur un escalier mécanique dont l'inclinaison est de l'ordre de 30°, la largeur de l'une et l'autre ailes du dièdre formé par ce support peut être modifiée, afin d'assurer le maximum de sécurité à l'encontre d'un déplacement intempestif d'une caisse placée sur ledit support. Dans le même but le support 9 selon l'invention peut être placé plus près du fond de la corbeille 1 pour accroître la pénétration de la caisse reçue, à l'intérieur de cette corbeille. Cependant ceci implique un écartement plus important du support 9 par rapport à la paroi avant de la corbeille 1, donc une diminution de l'importance de l'emboîtement de plusieurs chariots les uns dans les autres.

Bien entendu, lorsque le présent support 9 n'est pas utilisé pour le transport d'une caisse d'emballage ou autre objet encombrant, il peut servir de support à tous autres objets ou marchandises placés à l'intérieur de la corbeille 1. Dans ces conditions l'adjonction de ce support ne limite pratiquement pas le volume utile de cette corbeille.

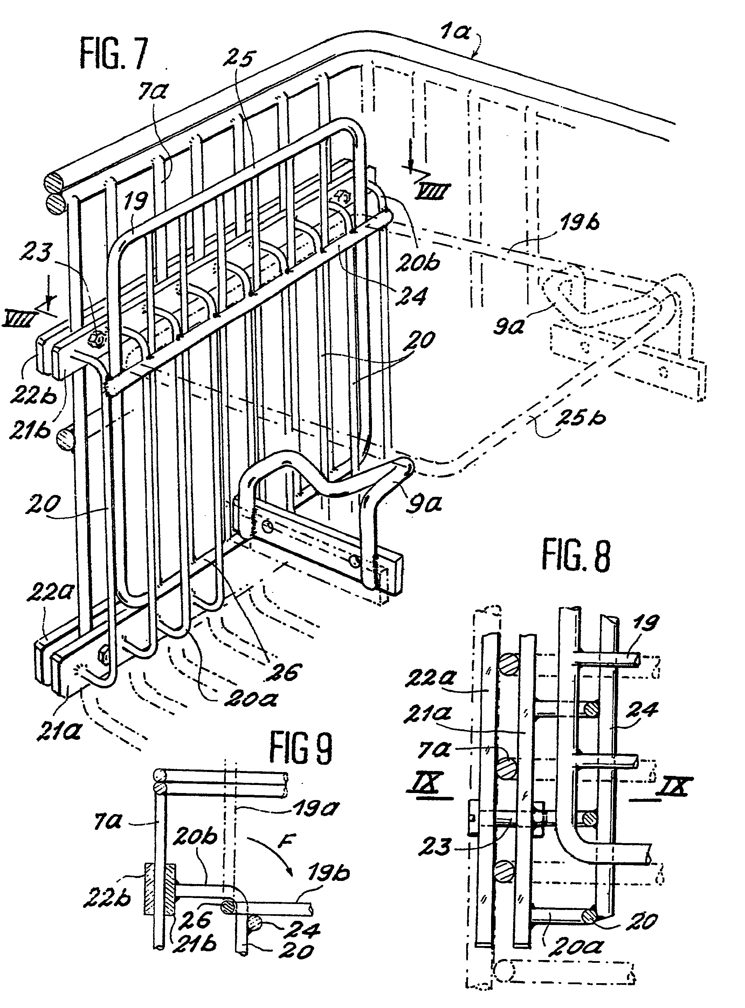

La figure 5 représente une autre forme de réalisation du présent support en forme de dièdre. Dans celle-ci ce support est matérialisé par deux éléments distincts 9a en forme de V qui sont rapportés sur la face interne de l'une et l'autre parois latérales 5 et 6 de la corbeille 1. Ces deux éléments sont disposés l'un en regard de l'autre pour définir un berceau de réception apte à recevoir une caisse d'emballage ou similaire dont les contours 17a sont représentés en traits mixtes.

Chacun des éléments 9a est constitué par un fil métallique coudé à angle droit en son milieu et dont les extrémités 18 sont rabattues et fixées sur une plaque de montage 14a. Celle-ci permet la fixation de l'élément considéré sur la paroi correspondante 5 ou 6 de la corbeille 1 et ce, au moyen d'une contre-plaque extérieure 15a et de boulons de serrage 16a.

Le berceau de réception ainsi constitué par les deux éléments complémentaires 9a est apte à jouer le même rôle que le support 9 représenté aux figures 1 à 3. En effet il est apte à recevoir une caisse d'emballage de section carrée ou rectangulaire. Cette forme de réalisation particulière a pour avantage que l'espace existant entre les deux éléments 9a reste entièrement libre lorsque ceux-ci ne sont pas utilisés. Cependant le berceau de réception ainsi réalisé ne peut recevoir qu'une caisse d'emballage dont la largeur occupe tout l'espace disponible entre les deux supports 9a afin que ses deux coins correspondants puissent être emboîtés dans l'un et l'autre de ces supports. C'est pourquoi les dimensions sont telles que l'espace laissé libre entre ces deux supports corresponde à la largeur habituelle des caisses d'emballage de bouteilles de boissons diverses.

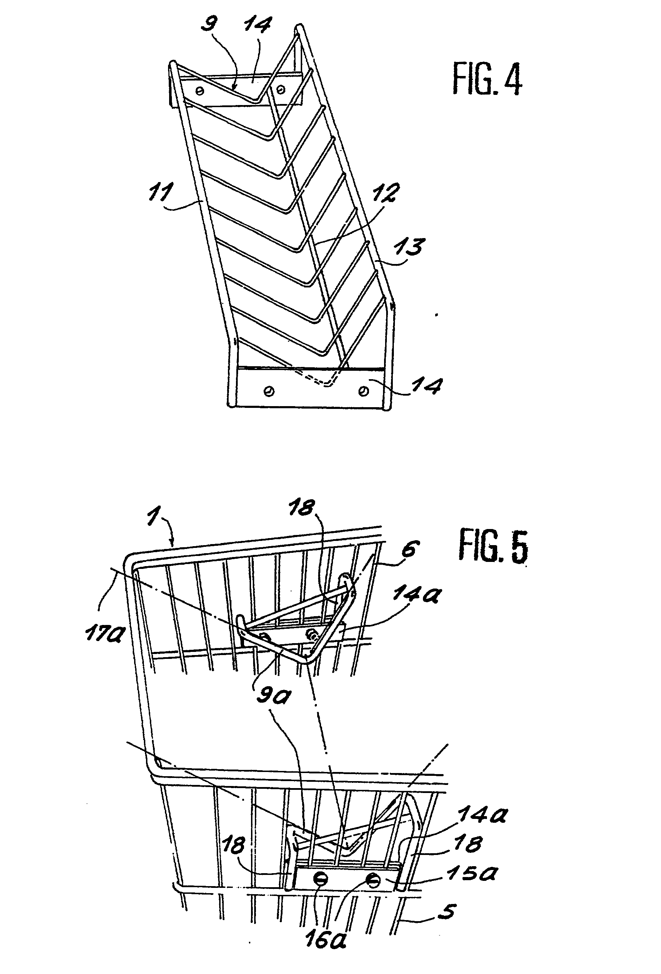

Les figures 6 à 9 représentent une autre forme de réalisation encore du chariot selon l'invention. Dans celle-ci le support en forme de dièdre, prévu à l'intérieur de la partie avant de la corbeille de transport, est associé à un volet mobile 19 apte à servir de plateau pouvant supporter diverses marchandises lorsque le support en forme de dièdre n'est pas utilisé. Ce support peut être constitué par deux éléments complémentaires 9a en forme de V et similaires à ceux prévus dans la forme de réalisation selon la figure 5. Cependant ce support pourrait tout aussi bien être constitué par une grille pliée en V, telle que la grille 9 représentée à la figure 4.

L'agencement est tel que le volet mobile 19 puisse être escamoté verticalement contre la paroi avant 7a de la corbeille correspondante 1a du chariot, lorsque ce volet n'est pas utilisé. Comme représenté sur la figure 6, ce volet est constitué par une grille métallique qui, dans sa position d'escamotage, est disposée verticalement à l'intérieur d'un compartiment délimité par une grille verticale 20 rapportée contre la face interne de la paroi avant 7a de la corbeille 1a. A cet effet les extrémités inférieure 20a et supérieure 20b de cette grille sont coudées vers l'avant de façon à ménager un espace constituant le compartiment vertical servant de logement au volet 19. Ces extrémités sont fixées sur des plaques de montage 21a et 21b permettant de fixer la grille 20 en place au moyen de contre-plaques 22a et 22b et de boulons de serrage 23. Une traverse 24, constituée par un fil métallique horizontal, est fixée sur les fils verticaux de la grille 20 à proximité de leur extrémité supérieure 20b. Comme il sera expliqué ci-après, cette traverse est destinée à servir de support au volet 19 lorsque celui-ci est placé horizontalement en position d'utilisation.

Dans la position d'escamotage de ce volet (figure 6), l'extrémité 25 de celui-ci fait saillie au-dehors du logement constitué par la grille 20. Quant à son extrémité opposée 26, elle se trouve alors située à la partie inférieure de ce logement. Pour amener le volet 19 en position d'utilisation, il convient tout d'abord de le faire coulisser verticalement vers le haut jusque dans la position 19a représentée en traits mixtes sur la figure 9, c'est-à-dire jusqu'à ce que son extrémité 26 vienne en butée contre l'extrémité supérieure 20b des fils verticaux de la grille 20. Puis il suffit de faire basculer ce volet vers l'arrière selon la flèche F, pour qu'il vienne occuper la position horizontale 19b représentée en traits pleins sur la figure 8. Ce volet se trouve alors parfaitement immobilisé dans cette position par le fait qu'il prend appui sur la traverse horizontale 24, alors que son extrémité 26 est retenue par les extrémités supérieures 20b des fils verticaux de la grille 20. Quant à l'extrémité opposée 25 de ce volet elle se trouve alors dans la position 25b représentée en traits mixtes sur la figure 7 et l'agencement est tel qu'elle prend alors appui sur le dessus des deux éléments 9a matérialisant le berceau en forme de dièdre prévu à l'intérieur de la corbeille 1a.

En conséquence le volet 19 est parfaitement soutenu et immobilisé dans la position correspondante. De ce fait il peut servir de plateau pouvant recevoir un objet relativement encombrant, par exemple une caisse d'emballage 27 comme représenté sur la figure 5. Compte tenu que dans sa position d'utilisation le volet 19 est situé à une certaine distance au-dessous des bords supérieurs de la corbeille correspondante 1a, la partie inférieure de cette caisse d'emballage se trouve alors partiellement emboitée à l'intérieur de cette corbeille. Ceci assure donc son maintien en place sur le plateau de support constitué par le volet 19.

En disposant d'un chariot tel que celui représenté aux figures 6 à 9, il est possible d'utiliser l'un ou l'autre des deux supports prévus dans la corbeille de transport de ce chariot pour transporter un objet relativement encombrant en plus des autres objets placés en vrac à l'intérieur de cette corbeille. Ceci est donc un avantage important du présent chariot par rapport aux chariots classiques de ce genre existant actuellement.

Bien entendu la présente invention a pour objet, non seulement le présent chariot de transport dans son ensemble, mais également l'accessoire constitué par un support en forme de dièdre apte à être fixé transversalement à l'intérieur de la partie avant de la corbeille de transport d'un chariot de supermarchés. Ce support peut alors consister soit en une grille 9 pliée en V, soit en deux éléments distincts 9a coudés en V et susceptibles d'être fixés l'un en regard de l'autre. Dans l'un et l'autre cas cette grille ou ces éléments sont en place sur les parois latérales de la corbeille de transport d'un chariot au moyen de contre-plaques et de boulons de serrage.

**Revendications**

1. Chariot de transport, notamment pour la clientèle des magasins à libre-service, du type comportant une grande corbeille de transport (1), située au-dessus d'un socle (2) monté sur des roulettes (3), et qui comporte un support (9, 9a) s'étendant dans le sens transversal pour pouvoir recevoir une caisse d'emballage (17) ou similaire, caractérisé en ce que le support (9, 9a) ainsi prévu affecte la forme d'un dièdre ouvert vers le haut apte à constituer un berceau de réception pour une caisse d'emballage (17) ou similaire, ce support étant disposé à l'intérieur de la corbeille de transport (1) du chariot correspondant, en avant de la partie de cette corbeille à l'intérieur de laquelle s'emboîte la partie avant de la corbeille similaire d'un autre chariot lors de la réunion de ceux-ci.

2. Chariot selon la revendication 1, caractérisé en ce que l'angle formé par le dièdre du support (9, 9a) est un angle droit et la bissectrice (OX) de cet angle est disposée à peu près verticalement.

3. Chariot selon l'une des revendications précédentes, caractérisé en ce que la disposition du support (9, 9a) à l'intérieur de la corbeille (1, 1a) de celui-ci est telle qu'une caisse parallélépipède (17) placée dans ce support prend également appui sur le bord avant (1b) de la ceinture supérieure de cette corbeille.

4. Chariot selon l'une des revendications 1 à 3, caractérisé en ce que le support en forme de dièdre est constitué par une grille métallique (9) coudée en V, et dont les extrémités sont fixées sur la face interne des parois latérales (5, 6) de la corbeille de transport (1) de ce chariot.

5. Chariot selon l'une des revendications 1 à 3, caractérisé en ce que le support en forme de dièdre est matérialisé par deux éléments (9a) en V rapportés, en regard l'un de l'autre, sur la face interne des parois latérales (5, 6) de la corbeille de transport de ce chariot, chacun de ces éléments en V étant avantageusement constitué par un fil métallique plié dans cette forme.

6. Chariot selon l'une des revendications précédentes, caractérisé en ce que sa corbeille de transport (la) comporte un volet mobile (19) apte à servir de plateau horizontal pouvant supporter un objet (27) relativement encombrant, ce volet (19) étant susceptible d'être escamoté verticalement à l'intérieur d'un logement formé par une grille verticale (20) rapportée contre la face interne de la paroi avant (7a) de la corbeille de transport (la) et qui porte une traverse horizontale (24) destinée à supporter le volet (19) dans sa position horizontale d'utilisation.

7. Accessoire pour un chariot de transport selon l'une des revendications précédentes, consistant en un support (9, 9a) susceptible d'être fixé transversalement à l'intérieur de la corbeille de transport (1, la) d'un tel chariot pour servir de support à une caisse d'emballage (17) ou similaire, caractérisé en ce que ce support (9, 9a) affecte la forme d'un dièdre ouvert vers le haut qui est apte à constituer un berceau de réception d'une caisse d'emballage (17) ou similaire, ce support étant pourvu de plaques de montage (14, 14a) permettant de le fixer contre les parois latérales (5, 6) de la corbeille de transport (1) d'un chariot.

8. Accessoire selon la revendication 7, caractérisé en ce que le support en forme de dièdre est constitué par une grille métallique (9) coudée en V, dont les extrémités sont portées par des plaques de montage (14) permettant de fixer cette grille sur les parois verticales (5, 6) de la corbeille de transport (1) d'un chariot.

9. Accessoire selon la revendication 7, caractérisé en ce que le support en forme de dièdre est constitué par deux éléments distincts (9a) coudés en V, et qui sont portés par des plaques de montage (14a); permettant de fixer ces éléments l'un en regard de l'autre sur les parois latérales (5, 6) de la corbeille de transport (1) d'un chariot.

**Patentansprüche**

1. Handwagen, insbesondere für die Kunden von Selbstbedienungsläden, mit einem großen Transportkorb (1), der oberhalb eines mit Rollen (3) ausgestatteten Untergestells· (2) angeordnet ist, und der einen sich quer zum Korb erstreckenden Träger (9, 9a) zur Aufnahme einer Transportkiste (17) o. dgl. aufweist, dadurch gekennzeichnet, daß der so angeordnete Träger (9, 9a) die Form eines nach oben offenen Winkelstücks aufweist und eine Wiege zur Aufnahme einer Transportkiste (17) o. dgl. bildet, und daß der Träger im Innern des Transportkorbs (1) des Handwagens angeordnet ist, und zwar vor einem Bereich dieses Transportkorbs, in den sich der vordere Teil eines Transportkorbs eines anderen Handwagens beim Ineinanderschieben einspannt.

2. Handwagen nach Anspruch 1, dadurch gekennzeichnet, daß der Winkel des aus dem Winkelstück gebildeten Trägers (9, 9a) ein rechter Winkel ist und die Winkelhalbierende (OX) dieses Winkels angenähert vertikal angeordnet ist.

3. Handwagen nach einem der vorangehenden Ansprüche 1 bis 2, dadurch gekennzeichnet, daß die Anordnung des Trägers (9, 9a) im Innern des Transportkorbs (1, 1a) so getroffen ist, daß eine Kiste (19) in Form eines Parallelepipeds, die auf dem Träger plaziert ist, sich auch an dem vorderen oberen Rand (1b) des Transportkorbs abstützt.

4. Handwagen nach einem der Ansprüche 1 bis 3, dadurch gekennzeichnet, daß der Träger in Form des Winkelstücks ein V-förmig gebogenes metallisches Gitter (9) aufweist, dessen Enden an der inneren Oberfläche der Seitenwandungen (5, 6) des Transportkorbs des Handwagens befestigt sind.

5. Handwagen nach einem der Ansprüche 1 bis 3, dadurch gekennzeichnet, daß der Träger in Form des Winkelstücks zwei V-förmige Elemente (9a) aufweist, die jeweils an der Innenseite der Seitenwandungen (5, 6) des Transportkorbs des Handwagens angeordnet sind, wobei jedes V-förmige Element vorteilhaft aus einem derart gebogenen Metalldraht besteht.

6. Handwagen nach einem der Ansprüche 1 bis 5, dadurch gekennzeichnet, daß der Transportkorb (1a) ein beweglich angeordnetes Gitter (19) aufweist, welches als etwa horizontales Auflager zur Aufnahme eines relativ sperrigen Gegenstands (27) dienen kann und vertikal im Innern eines Aufnahmeplatzes unterbringbar ist, der von einem Vertikalgitter (20) gebildet wird, welches an der Innenseite der Vorderwand (7a) des Transportkorbs (1a) angeordnet ist und eine horizontale Traverse (24) aufweist, die das Gitter in seiner horizontalen Gebrauchsstellung abstützt.

7. Zubehörteil für einen Handwagen nach einem der vorangehenden Ansprüche, aus einem quer im Innern des Transportkorbs (1, la) anzuordnenden Träger (9, 9a), der als Auflager für eine Transportkiste (17) o. dgl. dient, dadurch gekennzeichnet, daß der Träger (9, 9a) die Form eines nach oben offenen Winkelstücks aufweist und eine Wiege zur Aufnahme einer Transportkiste (17) o. dgl. bildet, und daß der Träger Montageplatten (14, 14a) zur Befestigung an den Seitenwandungen (5, 6) des Transportkorbs (1) des Handwagens aufweist.

8. Zubehörteil nach Anspruch 7, dadurch gekennzeichnet, daß der Träger in Form des Winkelstücks ein V-förmig gebogenes metallisches Gitter (9) aufweist, dessen Enden mit Montageplatten (14) verbunden sind, die die Befestigung des Gitters an den Seitenwandungen (5, 6) des Transportkorbs (1) des Handwagens gestatten.

9. Zubehörteil nach Anspruch 7, dadurch gekennzeichnet, daß der Träger in Form des Winkelstücks zwei V-förmige einzelne Elemente (9a) aufweist, die von Montageplatten (14a) gehalten sind, die die jeweilige Befestigung der Elemente an den Seitenwandungen (5, 6) des Transportkorbs (1) des Handwagens gestatten.

## Claims

1. Carrier trolley, in particular for customers of self-service stores, of the type comprising a large carrier basket (1) which is located above a base (2) mounted on casters (3) and comprises a support (9, 9a) which extends in the transverse direction so as to be capable of receiving a packing-case (17) or the like, characterized in that the support (9, 9a) thus provided assumes the shape of a dihedron which is open at the top and capable of constituting a reception cradle for a packing-case (17) or the like, said support being placed within the carrier basket (1) of the corresponding trolley in a forward position with respect to that portion of said basket within which the front portion of the similar basket of another trolley engages when these trolleys are coupled together.

2. Trolley in accordance with claim 1, characterized in that the angle formed by the dihedron of the support (9, 9a) is a right angle and the line (OX) bisecting said angle is placed approximately vertically.

3. Trolley in accordance with one of the preceding claims, characterized in that the arrangement of the support (9, 9a) within the basket (1, la) of this latter is such that a parallelepipedal box (17) placed within said support also bears on the front edge (1b) of the top peripheral band of said basket.

4. Trolley in accordance with one of claims 1 to 3, characterized in that the dihedral support is constituted by a metallic grid (9) elbowed in the shape of a V, the ends of which are fixed on the internal faces of the lateral walls (5, 6) of the carrier basket (1) of said trolley.

5. Trolley in accordance with one of claims 1 to 3, characterized in that the dihedral support is formed by two V-shaped elements (9a) mounted opposite to each other on the internal faces of the lateral walls (5, 6) of the carrier basket of said trolley, each of these V-shaped elements being advantageously constituted by a wire which is bent in this shape.

6. Trolley in accordance with one of the preceding claims, characterized in that its carrier basket (la) has a movable flap (19) designed to serve as a horizontal platform which is capable of supporting a relatively bulky object (27), said flap (19) being intended to be withdrawn vertically within a housing formed by a vertical grid (20) which is mounted against the internal face of the front wall (7a) of the carrier basket (la) and carries a horizontal crossmember (24) which is intended to support the flap (19) in its horizontal position of use.

7. Accessory for a carrier trolley in accordance with one of the preceding claims, consisting of a support (9, 9a) which is intended to be fixed transversely within the carrier basket (1, la) of a trolley of this type in order to serve as a support for a packing-case (17) or the like, characterized in that said support (9, 9a) assumes the shape of a dihedron which is open at the top and capable of constituting a reception cradle for a packing-case (17) or the like, said support being provided with mounting plates (14, 14a) for fixing it against the lateral walls (5, 6) of the carrier basket (1) of a trolley.

8. Accessory in accordance with claim 7, characterized in that the dihedral support is constituted by a metallic grid (9) which is elbowed in the shape of a V and the extremities of which are carried by mounting plates (14) for fixing said grid on the vertical walls (5, 6) of the carrier basket (1) of a trolley. 9. Accessory in accordance with claim 7, characterized in that the dihedral support is constituted by two separate elements (9a) which are elbowed in the shape of a V and carried by mounting plates (14a) for fixing said elements opposite to each other on the lateral walls (5, 6) of the carrier basket (1) of a trolley.

# FIG. 1

# FIG. 6

FIG. 2

FIG. 3

FIG. 4

FIG. 5

FIG. 7

FIG. 8

FIG 9